# EUROPEAN PATENT APPLICATION

(11) **EP 2 302 335 A1**
(43) Date of publication of application: **30.03.2011**
(21) Application number: 10170080.5
(22) Date of filing: 20.07.2010
(51) Int. Cl.: G01F 1/692, G01F 15/00

(54) **Heating resistance type air flow rate measuring device**

(30) Priority: 25.09.2009 JP 2009219893
(71) Applicant: Hitachi Automotive Systems, Ltd., Hitachinaka-shi Ibaraki 312-8503 (JP)
(72) Inventor: Minamitani, Rintaro, Tokyo 100-8220 (JP); Hanzawa Keiji, Ibaraki 312-0062 (JP); Yasukawa, Akio, Ibaraki 312-8503 (JP); Onose, Yasuo, Ibaraki 312-8503 (JP)
(74) Representative: MERH-IP Matias Erny Reichl Hoffmann

(57) **Abstract**

A temperature of the heating resistor 3 is set at a temperature equal to or higher than a temperature, at which liquid droplets contacting a surface of the heating resistor 3 evaporate and disappear by film boiling. Alternatively, when a heating resistance type air flow rate measuring device starts to operate or stops operating, the temperature of the heating resistor 3 may be set at a temperature equal to or higher than the temperature, at which liquid droplets contacting a surface of the heating resistor 3 evaporate and disappear by film boiling. Moreover, a water-repellent and oil-repellent protective coating may be provided on the surface of the heating resistor.

## Description

### BACKGROUND OF THE INVENTION

### Field of the Invention

The present invention relates to a measuring element provided on a diaphragm portion for thermally insulating a heating resistor and a thermal sensitive resistor from a semiconductor substrate. The present invention particularly relates to an air flow meter that measures a flow rate of air flowing through a suction air passage of an internal combustion engine.

### Description of the Related Art

An air flow meter provided in a suction air passage of an internal combustion engine for an automobile and the like so as to measure an amount of suction air is required to achieve high speed response, high sensitivity, and long-term stability for the purpose of optimally controlling an engine based on an output signal to reduce fuel consumption. To meet the request, an air flow meter with high sensitivity is achieved on the basis of a semiconductor thin film layer formation technique and a micromachining technique, and employs a measuring element including a resistor that serves as a heater and that is thermally insulated from a semiconductor substrate (for example, see JP Patent Application Publication No. 8-271308). Heating the resistor as the heater on the semiconductor substrate to a high temperature leads to an improvement in flow rate detection sensitivity of a sensor. In addition, such heating bums off organic-based materials such as oil mixed in the environment, thereby leading to an improvement in contamination resistance of the sensor. Moreover, a water-repellent or oil-repellent coating is provided on a sensor element to suppress degradation of property fluctuation caused by dirt adhering to the sensor element during operation, so that long-term stability is achieved (for example, see JP Patent Application Publication No. 2000-169795).

### SUMMARY OF THE INVENTION

The present invention particularly prevents adhesion of salt to a resistor type air flow meter among contaminated water, petroleum, droplets, silicone oil, soot, salt, hydrocarbon, and dust particles that exist in the installation environment. There is a problem that when rain or snow including sea salt in a coastal area or snow melting salt in a cold district is sucked, the salt intensively accumulates and adheres to the resistor. Accumulation and adhesion of the salt to the resistor cause degradation in measurement accuracy of the air flow meter over time, and also cause corrosion of materials of components including the resistor and a wiring.

Here, a behavior of accumulation and adhesion of the salt to the resistor will be described using a behavior of water droplets including salt on a heat transfer surface. The following four states are included in a phenomenon in which a water droplet on a surface of a material is heated to disappear.
1. Convection: the water droplet is heated to evaporate through convection at a temperature of not more than a boiling start temperature.
2. Nucleate boiling: the water droplet boils only at a portion on a depression or projection of the heat transfer surface; convection occurs in the other portion.
3. Transition boiling: the water droplet is in a transitional state from nucleate boiling to film boiling.
4. Film boiling: the entire heat transfer surface is covered with vapors.

Heat transfer under the temperature conditions of film boiling is smaller than that in nucleate boiling because the entire heat transfer surface is covered with vapors. Specifically, film boiling is quiet stable boiling caused by heat transfer within a vapor film while the heat is transferred from the heat transfer surface only through the vapor film. When a salt concentration in the water droplet increases by evaporation of the water droplet and the salt concentration exceeds the saturated concentration, the salt starts to be deposited. The water droplet is not in contact with the heat transfer surface, but is in contact with only the vapor film. For that reason, the salt gets deposited while floating in the air, and the adhesion of the salt onto the heat transfer surface is quite low. In other words, in this state, the salt does not adhere closely to the heat transfer surface. On the other hand, under the temperature conditions of transition boiling and nucleate boiling, the heat transfer surface partly has a boiling region and a non-boiling region. In the non-boiling region, the heat transfer surface is in contact with the water droplet. The salt concentration in the water droplet increases as the water evaporates. The salt starts to be deposited when the salt concentration exceeds the saturated concentration. The adhesion of the salt onto the heat transfer surface is high because the water droplet is in contact with the heat transfer surface and the salt gets deposited on the heat transfer surface. In other words, in this state, the salt adheres closely to the heat transfer surface. From above, under the condition that the heating resistor is at or below the temperature of transition boiling and that of nucleate boiling, the salt accumulates and fixedly adheres to the heat transfer surface.

In the above-mentioned related art, an attempt has been made to provide a sensor element with a water-repellent or oil-repellent coating made of an organic-based material to prevent accumulation and adhesion of the salt on the resistor when the liquid droplets including the salt evaporate and disappear while being in contact with the resistor. However, when a surface temperature of the resistor is high, the water-repellent or oil-repellent coating made of an organic-based material is degraded due to thermal oxidation. Thus, use of such a water repellent or oil-repellent coating has risks of reducing the water-repellent and oil-repellent effects, and fluctuating properties of the resistor.

An object of the present invention is to prevent accumulation and adhesion of salt included in liquid droplets contacting a surface of a heating resistor, thereby to reduce contamination and corrosion of the heating resistor and to suppress reduction in measurement accuracy of a heating resistor type air flow meter.

In order to achieve the above-mentioned object, a water-repellent or oil-repellent material used in a semiconductor process and having such a property that liquid droplets contacting a sensor surface evaporate and disappear by film boiling at 200°C, for example, is used for a thin layer of the topmost surface layer of a thin film diaphragm; a material that can be used at a high temperature in the environment, for example, not less than 300°C is used for the heating resistor; and a temperature of the heating resistor is set at a temperature equal to or higher than the temperature at which the liquid droplets contacting the sensor surface evaporate and disappear by film boiling during operation of a heating resistor type air flow rate sensor. Here, the temperature of the heating resistor is not intended to be set as high as possible. If the temperature is set too high, the life of the heating resistor in the heating resistance type air flow rate measuring device is remarkably short, or electronic components and a connection portion mounted on an electronic circuit may be degraded or broken down due to constant exposure to the high temperature. Accordingly, the maximum temperature is set at 460°C or less, for example.

To achieve the above-mentioned object, tetraethoxysilane (Si(OC₂H₅)₄, hereinafter, referred to as TEOS) or the like is used for the topmost surface layer of a thin film diaphragm. Ta, Mo, Ti, W, Co, Ni, Nb, Hf, Cr, Zr or Fe is used for a metal layer in a heating resistor of the thin film diaphragm. A temperature of the heating resistor is set at a temperature equal to or higher than the temperature at which the liquid droplets contacting a sensor surface evaporate and disappear by film boiling during operation of a heating resistor type air flow meter.

Accumulation and adhesion of the salt included in the liquid droplets contacting the surface of the heating resistor are prevented to reduce contamination and corrosion of the heating resistor and to suppress reduction in measurement accuracy of the heating resistor type air flow meter.

### BRIEF DESCRIPTION OF THE DRAWINGS

Fig. 1 is a diagram showing one embodiment of a measurement element provided in a heating resistance type air flow rate sensor to which the present invention is applied; Fig. 1A is a schematic plan view thereof; and Fig. 1B is an enlarged sectional view taken along line A-A of Fig. 1A.
Fig. 2 is a diagram showing a schematic configuration according to one embodiment of a measurement element provided in the heating resistance type air flow rate sensor to which the present invention is applied.
Fig. 3 is a relationship diagram between the life and a surface temperature of liquid droplets until the liquid droplets on a high temperature surface evaporate and disappear.
Figs. 4A and 4B are diagrams each showing a form of salt on a surface of the heating resistor.

### DESCRIPTION OF THE PREFERRED EMBODIMENT

Hereinafter, an embodiment according to the present invention will be described.

### First embodiment

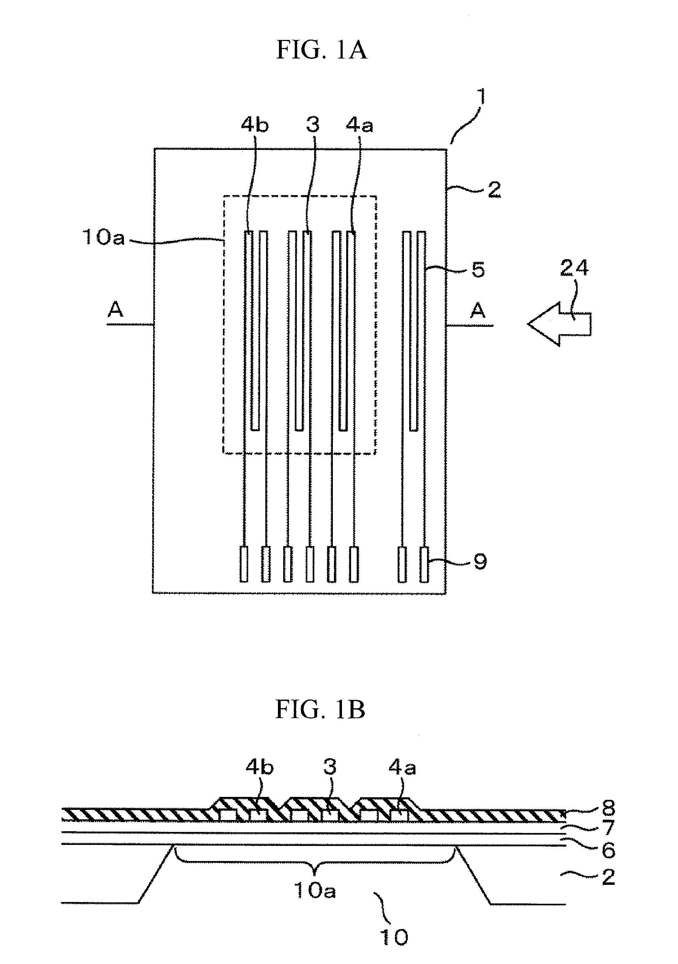

Hereinafter, a heat type air flow rate sensor using a diaphragm sensor according to the present invention will be described as an example. Fig. 1A is a schematic plan view of a measurement element 1 of the air flow rate sensor, and Fig. 1B is an enlarged sectional view taken along line A-A of Fig. 1A. The heat type air flow rate sensor measurement element 1 according to the present embodiment is formed of a semiconductor substrate 2, a heating resistor 3, an upstream thermal sensitive resistor 4a, a downstream thermal sensitive resistor 4b, an air temperature thermal sensitive resistor 5, and the like, as shown in Fig. 1A. A thin film diaphragm 10a having a hollow portion 10 is formed in a central part on a bottom surface of the semiconductor substrate 2 made of a single crystal silicon substrate having a rectangular shape. The heating resistor 3, the upstream thermal sensitive resistor 4a, and the downstream thermal sensitive resistor 4b are formed on the thin film diaphragm 10a. The air temperature thermal sensitive resistor 5 is formed on the outside of the thin film diaphragm 10a of the semiconductor substrate 2. A terminal 9 for electrically connecting the heating resistor 3, the upstream thermal sensitive resistor 4a, the downstream thermal sensitive resistor 4b, and the air temperature thermal sensitive resistor 5 to an external circuit is formed on the outside of the thin film diaphragm 10a of the semiconductor substrate 2. Each of the heating resistor 3, the thermal sensitive resistor 4, and the air temperature thermal sensitive resistor 5 may be formed so as to be turned back several times. A configuration of the resistor varies with measurement methods, and the configuration here is shown as an example. The heating resistor 3 that functions as a microheater, the thermal sensitive resistors 4a and 4b, and the air temperature thermal sensitive resistor 5 may have the same film structure or may have a different film structure. In Fig. 1B which shows a cross section of the thin film diaphragm 10a along line A-A shown in Fig. 1A, the heating resistor 3 and the thermal sensitive resistors 4a and 4b are arranged between lower thin films of electrical insulation films 6 and 7 on one side and an upper thin film of an electrical insulation film 8 on the other.

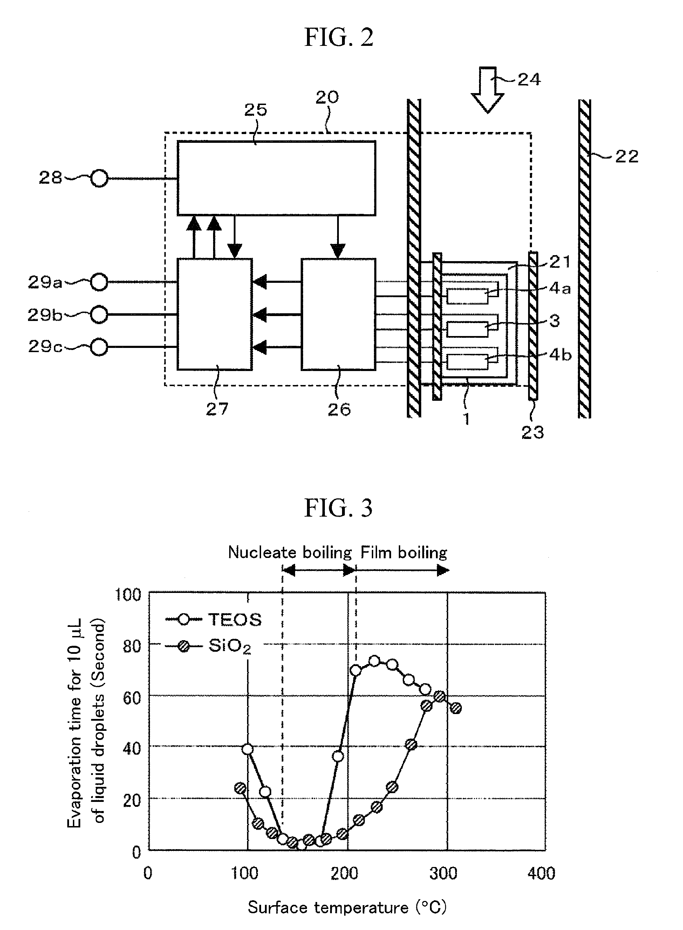

A heating resistance type air flow rate measuring device 20 having the above-mentioned configuration includes a support 21 that supports the measurement element 1, an external circuit, and the like, as shown in Fig. 2. The measurement element 1 is disposed within a subpassage 23 within a suction air passage 22 of an electronic control fuel injection system, and the external circuit is installed on an outer wall surface of the suction air passage 22. The heating resistor 3 and the thermal sensitive resistors 4a and 4b are electrically connected to an electronic circuit including a power supply control circuit 25 including a heating resistor heating control circuit (hereinafter, written as control circuit) 26, an output adjustment circuit 27, and the like. A heating temperature of the heating resistor 3 is controlled by the control circuit 26 so as to have an approximately constant difference from a suction air temperature detected by the thermal sensitive resistors 4a and 4b. Accordingly, a suction air flow can be detected on the basis of an amount of heat dissipated from the heating resistor 3 to suction air 24. In addition, the direction of the air flow can be detected using such a property that a temperature of the upstream thermal sensitive resistor is reduced. A flow rate detection method by the heating resistance type air flow rate measuring device 20 has other methods such as detection using a heating heater and a temperature detection resistance heated by the heating heater, and the like. However, description of each of methods in the present invention will be omitted because the methods are similar to each other. This heating resistance type air flow rate measuring device includes a power supply terminal 28 connected to a power supply, a flow rate output terminal 29a that outputs a flow rate signal, a temperature output terminal 29b that outputs a suction air temperature signal, and a ground terminal 29c. The heating resistance type air flow rate measuring device is electrically connected to an external device as well.

The heating resistor 3 of the heating resistance type air flow rate measuring device 20 is heated and controlled during air flow rate measurement, i.e., while an engine is being driven. The heating resistor has a constant difference between the heating temperature of the heating resistor and the suction air temperature. Accordingly, when the suction air temperature (outdoor air temperature) is lower (for example, in a cold district), a surface temperature of the heating resistor is relatively lower.

Although the heating temperature of the heating resistor 3 is different depending on models, the heating resistance type air flow rate measuring device 20 usually uses the control circuit 26 to control the heating temperature of the heating resistor 3 so that the heating resistor 3 may be 200°C higher than the suction air temperature. Because a range of the suction air temperature is -40 to 120°C, the surface temperature of the heating resistor is set at 160 to 320°C. When the temperature of the heating resistor 3 is 320°C, there is a risk that the water-repellent and oil-repellent protective coating provided in the heating resistor described as a related art may be thermally degraded, which in turn reduces the water repellent and oil-repellent effects so that the properties of the heating resistor may be fluctuated. A related art in which an organic water-repellent and oil-repellent protective coating is decomposed to disappear at a high temperature is also reported. However, there is a conceivable risk that insufficient decomposition and disappearance of the protective coating undesirably fluctuates the properties of the heating resistor in the environment where the suction air temperature changes in the range of -40 to 120°C.

According to the description above, a heating resistance type air flow meter is configured as follows. A heating resistance type air flow rate measuring device includes: a heating resistor having a surface temperature set to detect a flow rate of air sucked by an internal combustion engine; and an electronic circuit that is electrically connected to the heating resistor and outputs an signal according to the flow rate of the suction air, on the basis of an amount of heat dissipated from the heating resistor or a detected temperature. As for the heating resistance type air flow meter, a water-repellent or oil-repellent material which has such properties that liquid droplets contacting a sensor surface evaporate and disappear by film boiling at a low temperature (for example, 200°C) is used for a thin film for a topmost surface layer of a thin film diaphragm. Moreover, a thin film material that can be used at a high temperature (for example, 340°C) in the environment is used for a heating resistor thin film. Furthermore, a temperature of the heating resistor is set at a temperature equal to or higher than the temperature at which the liquid droplets contacting the sensor surface evaporate and disappear by film boiling during operation of the heating resistor type air flow meter.

Here, description will be given of the water-repellent or oil-repellent material which has such properties that liquid droplets contacting a sensor surface evaporate and disappear by film boiling at a low temperature (for example, 200°C) and the thin film material that can be used at a high temperature (for example, 360°C) in the environment.

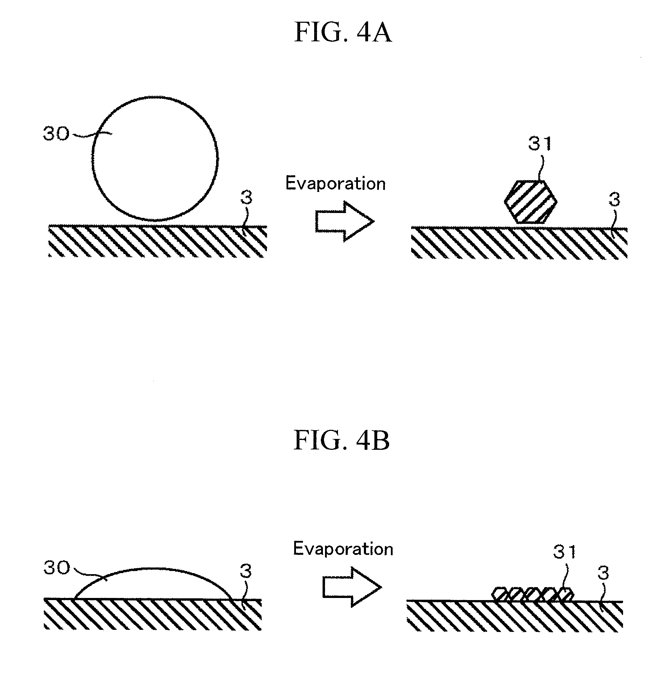

First, the water-repellent or oil-repellent material which has such properties that liquid droplets contacting a sensor surface evaporate and disappear by film boiling at a low temperature (for example, 200°C) will be described. Fig. 3 shows a relationship between the life and a surface temperature of liquid droplets until the liquid droplets disappear when 10 µl of 3% NaCl in a form of liquid droplets is dropped onto a surface of TEOS (tetraethoxysilane), as well as onto a surface of SiO₂, at a high temperature. Droplets on TEOS do not exhibit clear water repellency at a normal temperature. As the surface temperature rises, the droplets evaporate and disappear by convection, nucleate boiling, and transition boiling, and then evaporate and disappear by film boiling at a temperature of not less than 200°C. At a temperature of not less than 200°C, since the liquid droplets are completely separated from the surface of the heating resistor by vapors, the liquid droplets stood still in a shape of a spheroid. As described above, when the temperature of the heating resistor is not less than a temperature of film boiling, the liquid droplets do not adhere to the surface of the heating resistor while a water film is not formed thereon. In this case, the degrees of the droplet adherence and the water film formation are equivalent to or higher than a case where the surface of the heating resistor has water repellency or oil repellency. Even when the liquid droplets remain in concave portions of the heating resistor, the liquid droplet is completely separated by vapors from the surface of the heating resistor. Fig. 4A shows a form of salt on the surface of the heating resistor 3. Here, even when a liquid droplet 30 evaporates and disappears, salt 31 gets deposited in a massive form on the surface of the heating resistor 3 without accumulation and adherence. The massive salt 31 get deposited while floating from the surface of the heating resistor 3. For this reason, the massive salt 31 can be blown away by a flow of the suction air. When the temperature of the heating resistor 3 is not more than a temperature of film boiling, moisture evaporates and disappears by convection, nucleate boiling, or transition boiling with the state where the liquid droplets wet the surface of the heating resistor and adhere onto the surface of the heating resistor at a predetermined contact angle, with the state of the water film 30. In this case, as shown in Fig. 4B, the salt 31 is in contact with the heating resistor in a process of evaporation of the water film 30. For this reason, the salt 31 accumulates and adheres to the heating resistor 3. In this case, it is difficult to blow away the salt 31 by a flow of the suction air. On the other hand, the droplets on SiO₂ do not exhibit clear water repellency at a normal temperature. As the surface temperature rises, the droplets on SiO₂ evaporate and disappear by convection, nucleate boiling, and transition boiling, and then evaporate and disappear by film boiling at a temperature of not less than 300°C. At a temperature of not less than 300°C, the liquid droplets are completely separated from the surface of the heating resistor by vapors, and the liquid droplets stood still in a shape of a spheroid. As mentioned above, the present inventors have found out that although TEOS does not exhibit clear water repellency at a normal temperature as in the case of SiO₂, TEOS exhibits water repellency and oil repellency from the vicinity of 200°C, in other words, TEOS exhibits water repellency and oil repellency at a temperature 100°C lower than SiO₂ does. A film boiling state can be expected when a protective coating is in use. However, as mentioned above, there is a conceivable risk that thermal degradation of the protective coating reduces the water repellent and oil-repellent effects, which in turn fluctuates the properties of the heating resistor.

When a material, such as TEOS, which has water repellency and oil repellency in the vicinity of 200°C, is used for a thin film of a different surface layer of the thin film diaphragm, fluctuation of properties due to adhering salt can be reduced. However, there is a conceivable risk that resistance may change over time at 200°C, depending on the material of the heating resistor. Accordingly, description will be given next of the thin film material that can be used in a high temperature in the environment.

From a viewpoint of resistance change over time of the heating resistor at a high temperature in the environment, the control circuit 26 generally controls the heating element so as to have a temperature 100 to 200°C higher than the suction air temperature detected by the thermal sensitive resistor 4. Because a range of the suction air temperature is -40 to 120°C, the surface temperature of the heating resistor of conventional products is set at 160 to 320°C or 60 to 220°C. At this temperature, not only SiO₂ but also TEOS does not exhibit water repellency and oil repellency during operation. As a heating resistor that can be used at a high temperature (for example, 350°C) in the environment, Pt, Ta, Mo, Ti, W, Co, Ni, Nb, Hf, Cr, Zr, Fe or the like is used for a metal layer. For example, when the control circuit 26 controls the heating element so as to have a temperature 300°C higher than the suction air temperature detected by the thermal sensitive resistor 4, the surface temperature of the heating resistor according to the present invention can be set at 260 to 420°C because the range of the suction air temperature is -40 to 120°C. At this set temperature, if TEOS is used for the thin film of the topmost surface layer of the thin film diaphragm and is used as a water-repellent or oil-repellent material which has such properties that the liquid droplets contacting the sensor surface evaporate and disappear by film boiling at a low temperature (for example, 200°C), then no salt accumulate and adhere to the heating resistor in any environments where automobiles are in use.

As described above, the water-repellent or oil-repellent material which has such properties that the liquid droplets contacting the sensor surface evaporate and disappear by film boiling at 200°C, for example, is used for the thin film of the topmost surface layer of the thin film diaphragm; the material that can be used at a high temperature in the environment of not less than 300°C, for example, is used for the heating resistor; and a temperature of the heating resistor is set at a temperature equal to or higher than the temperature at which the liquid droplets contacting the sensor surface evaporate and disappear by film boiling during operation of the heating resistor type air flow meter. Thus, fluctuation of properties due to the adhering salt as well as fluctuation of properties due to the resistance change over time can be reduced.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

### Explanation of Reference Numerals

- 1: heat type air flow rate sensor measurement element
- 2: semiconductor substrate
- 3: heating resistor
- 4a: upstream thermal sensitive resistor
- 4b: downstream thermal sensitive resistor
- 5: air-temperature thermal sensitive resistor
- 6, 7, and 8: electrical insulation film
- 10: hollow portion
- 10a: thin film diaphragm
- 21: support
- 22: suction air passage
- 23: subpassage
- 25: power supply control circuit
- 26: heating resistor heating control circuit
- 27: output adjustment circuit
- 28: power supply terminal
- 29a and 29b: output terminal
- 29c: ground terminal
- 30: liquid droplet
- 31: salt

## Claims

1. A heating resistance type air flow rate measuring device, comprising a measuring element including:
a semiconductor substrate (2);
an electrical insulation film (6, 7) formed on the semiconductor substrate (2);
a resistor that constitutes a heater formed on the electrical insulation film (6, 7); and
a hollow portion (10) formed by removing a portion of the semiconductor substrate (2) corresponding to a formation region of a resistor main body, thereby the hollow portion (10) forming the formation region of the resistor main body into a thin-wall portion, wherein
a thin film material exhibiting water repellency or oil repellency at a temperature equal to or higher than a temperature at which liquid droplets contacting a sensor surface evaporate and disappear by film boiling is formed on a topmost surface of a thin film diaphragm (10a) including a heating resistor (3), and
a temperature of the heating resistor (3) in operation is set at a temperature equal to or higher than the temperature at which the liquid droplets contacting the sensor surface evaporate and disappear by film boiling.

2. A heating resistance type air flow rate measuring device according to claim 1, **characterized by**
an electronic circuit that is electrically connected to the heating resistor (3) and outputs a signal according to a flow rate of the sucked air on the basis of an amount of heat dissipated from the heating resistor (3) or a detected temperature, wherein
a metal layer of a Ta film, a Mo film, a Ti film, a W film, a Co film, a Ni film, a Nb film, a Hf film, a Cr film, a Zr film, or a Fe film is formed as the heating resistor (3),
tetraethoxysilane is formed on a topmost surface of a thin film diaphragm (10a) including the heating resistor (3), and
a temperature of the heating resistor (3) is set at a temperature of not less than 200°C during operation of a heating resistor (3) type air flow rate sensor.

3. A heating resistance type air flow rate measuring device, comprising:
a heating resistor (3) in which a surface temperature is set to detect a flow rate of air sucked by an internal combustion engine; and
an electronic circuit that is electrically connected to the heating resistor (3) and outputs a signal according to a flow rate of the sucked air on the basis of an amount of heat dissipated from the heating resistor (3) or a detected temperature, wherein
a metal layer of a Ta film, a Mo film, a Ti film, a W film, a Co film, a Ni film, a Nb film, a Hf film, a Cr film, a Zr film, or a Fe film is formed as the heating resistor (3),
tetraethoxysilane is formed on a topmost surface of a thin film diaphragm (10a) including the heating resistor (3), and
a temperature of the heating resistor (3) is set at a temperature of not less than 200°C during operation of a heating resistor (3) type air flow rate sensor.
